# EUROPEAN PATENT SPECIFICATION

(11) **EP 2 594 441 B1**
(45) Date of publication and mention of the grant of the patent: **18.06.2014**
(21) Application number: 11189217.0
(22) Date of filing: 15.11.2011
(51) Int. Cl.: B60R 21/237

(54) **A method of packaging an airbag**
Verfahren zum Verpacken eines Airbags
Procédé d'emballage d'un airbag

(43) Date of publication of application: 22.05.2013
(73) Proprietor: Autoliv Development AB, 447 83 Vårgårda (SE)
(72) Inventor: Berntsson, Mats, SE-41461 Göteborg (SE); Sandinge, Pär, SE-52132 Falköping (SE)
(74) Representative: Parry, Simon James

(56) References cited:
- EP-A2- 1 127 752
- WO-A1-2011/075050
- US-A- 5 022 676

## Description

The present invention relates to a method of packaging an airbag, and more particularly relates to a method of packaging an airbag for a motor vehicle safety device.

It is now very well known to provide motor vehicles with one or more inflatable airbags to provide protection to the occupants, and also in some arrangements to pedestrians, in the event of an accident involving the motor vehicle. Typically, such airbags are formed from flexible fabric, although some arrangements use other flexible sheet material such as plastics material. Airbags can take various forms such as, for example; so-called driver airbags which typically inflate from within the hub of the motor vehicle's steering wheel to provide protection to the driver of the vehicle in the event of a frontal impact; inflatable curtains arranged to deploy downwardly inside the windows of the motor vehicle to protect occupants in the event of side impacts or rollover accidents; and side airbags arranged to deploy between an occupant of the vehicle and a side panel of the vehicle in order to protect the occupant in the event of a side impact. Of course many other types of airbags are also known, and the present invention is not limited to application to any particular type of airbag.

Modern motor vehicles are now often designed with very little available space for the mounting of packaged airbags. This can be for a variety of reasons such as aesthetic considerations and for reasons of comfort and convenience to occupants of the vehicle. It is therefore becoming increasingly important to produce very tightly packaged airbags which, in their un-deployed rolled and/or folded configuration, take up little space within the vehicle, thereby permitting more convenient and imaginative designs of interior trim or seats (for example in the case of side airbags which typically deploy from inside the structure or upholstery of a vehicle seat).

It is also considered convenient to provide such packaged airbags in the form of pre-formed modules or units which can then easily be installed in the motor vehicle during assembly on the production line. Typically, airbag units of this type comprise a hard plastic cover provided around the airbag in order to retain the airbag in its tightly packaged condition and to facilitate convenient and reliable installation of the unit in a motor vehicle. However, such covers add significantly to the cost and weight of the airbag unit, and also add extra bulk to the packaged airbag.

US 5 022 676 discloses a method packaging an airbag according to the preamble of claim 1.

It is a preferred object of the present invention to provide an improved method of packaging an airbag.

According to the present invention, there is provided a method of packaging an airbag for a motor vehicle safety device, the method comprising the steps of: providing an inflatable airbag formed of flexible sheet material; rolling and/or folding the airbag into an intermediate package having an initial cross-sectional thickness; simultaneously heating and pressing the intermediate package to form a compressed package having a reduced cross-sectional thickness relative to the intermediate package; subsequently placing the compressed package in a transportable cavity formed within a resiliently deformable material and having a shape and size comparable to the shape and size of the compressed package such that the resilience of the material applies pressure to the compressed package within the cavity; and cooling the compressed package to ambient temperature whilst it is in said transportable cavity.

Conveniently, said cavity is formed in foam.

Preferably, said step of heating and pressing the intermediate package involves plastic deformation of the airbag to form the compressed package.

Advantageously, the airbag is formed from plastic fabric material.

Conveniently, the airbag is formed from fabric woven from polyamide fibres.

Preferably, the airbag is formed from fabric having a coating.

Advantageously, said coating comprises thermoplastic material.

Conveniently, the method further comprises the step of transporting the compressed package whilst it is in said transportable cavity.

Preferably, said step of transporting the compressed package involves transporting the compressed package to a vehicle assembly plant or a vehicle component assembly plant.

Advantageously, the compressed package remains in said transportable cavity until it is required to be installed in a motor vehicle, or part of a motor vehicle, at said assembly plant.

Conveniently, said transportation of the compressed package occurs whilst it is being cooled to ambient temperature.

Preferably, said step of cooling the compressed package involves allowing the temperature of the package to fall naturally to ambient temperature without active cooling.

Advantageously, said transportable cavity is provided within a transport unit, the transport unit having a plurality of said cavities for the receipt of a plurality of airbags packaged in respective compressed packages.

Preferably, said transport unit comprises an insert of said resiliently deformable material, and said cavities are formed in the insert.

Conveniently, said step of pressing the intermediate package to form the compressed package involves the application of a pressing force of at least 5000N to the airbag. The pressing force may be in the range of 5 to 200 kN,

Preferably, said step of pressing the intermediate package to form the compressed package involves the use of a press comprising at least one pressing member, said pressing member being heated to at least 80°C. The pressing member can be heated to a temperature in the range of 80 to 150°C.

So that the invention may be more readily understood, and so that further features thereof may be appreciated, embodiments of the invention will now be described by way of example with reference to the accompanying drawings in which:
Figure 1 is a schematic plan view of an unfolded exemplary airbag suitable for packaging via the method of the present invention;
Figure 2 is a schematic cross-sectional illustration showing the airbag of figure 1 in a rolled intermediate package and positioned between two pressing members of a press;
Figure 3 is an illustration corresponding generally to that of figure 2, but which shows the pressing members having been pressed towards one another to compress the airbag into a compressed package;
Figure 4 is a plan view of the resulting compressed airbag package;
Figure 5 is a schematic cross-sectional view showing the compressed package being inserted into a transportable cavity;
Figure 6 is a view corresponding generally to that of figure 5, showing the compressed package received within the cavity;
Figure 7 is a schematic cross-sectional view showing an alternative form of cavity;
Figure 8 is a view corresponding generally to that of figure 7, showing the compressed package received in the alternative cavity;
Figure 9 is a schematic perspective view showing a transport unit having a plurality of such cavities for the receipt of respective packaged airbags;
Figure 10 is a perspective view of an alternative pressing member having a mould cavity which can be used in the method of the present invention;
Figure 11 shows a rolled airbag, formed into an intermediate package received in the mould cavity of the pressing member depicted in figure 10; and
Figure 12 is a view corresponding generally to that of figure 11, but which shows the airbag in a subsequent compressed package following a pressing step of the method of the present invention.

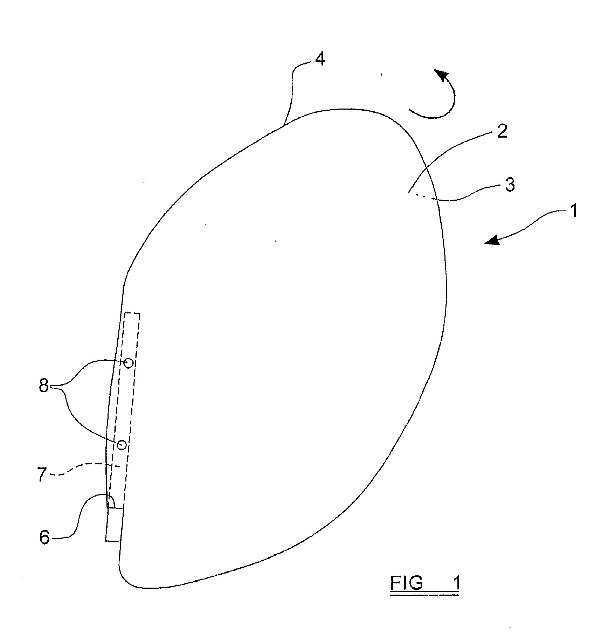

Referring initially to figure 1, there is shown an airbag 1 suitable for use in the method of the present invention. The particular airbag illustrated is a so-called side airbag of a type intended to be installed in a vehicle seat for deployment between the seat occupant and a side door or panel of the motor vehicle. However, it is to be appreciated that the method of the present invention is not restricted to use in packaging side airbags of the type illustrated, and indeed could be used to package airbags of any type. Furthermore, it should also be appreciated that the airbag 1 illustrated is shown in a basic form to illustrate clearly the general concept of the invention. Other more complex airbag configurations may also be packaged via the method of the present invention.

The airbag 1 may be formed from two substantially identical sheets of flexible material 2, 3, such as woven fabric, which are superimposed on one another and interconnected around their aligned edges by a peripheral seam 4 to define a large internal inflatable volume between the sheets for the receipt of inflating gas from an inflator such as a gas generator.

As will be appreciated by those of skill in the art of airbag manufacture, although the airbag 1 has been described above as being formed from two separate sheets 2, 3 of flexible material, it is envisaged that in variants of the invention the airbag could be formed from a single sheet of flexible material, the sheet being folded in half to create two superimposed layers which can then be interconnected by a peripheral seam in an otherwise similar manner to that described above with reference to figure 1. It is also envisaged that in some embodiments the two sheets 2, 3 could be woven simultaneously via a so-called "one-piece weaving" technique known *per se* in which the warp and weft yarns forming the two layers are interwoven in selected areas to form an interconnecting peripheral seam which is integral to the woven structure of the two sheets.

The fabric from which the airbag 1 is constructed is preferably a plastic fabric, for example a fabric formed by weaving together warp and weft yarns of polyamide fibres. The fabric may be provided with a coating of thermoplastic material.

The airbag is formed so as to have an opening 6 for insertion of the inflator 7 into the inflatable volume of the airbag. Figure 1 shows a cylindrical inflator 7 in its installed position in which the inflator extends through the opening 6 such that its major extent lies within the inflatable volume of the airbag. A short length of the inflator projects outwardly from the airbag through the opening 6 to facilitate electrical connection of a control cable. As is conventional, the inflator has a pair of outwardly extending mounting spigots 8 which project outwardly through respective apertures formed in the fabric of one of the sheets 2, and which are configured to be mounted to the structure of a vehicle seat, thereby anchoring the airbag in position against the seat.

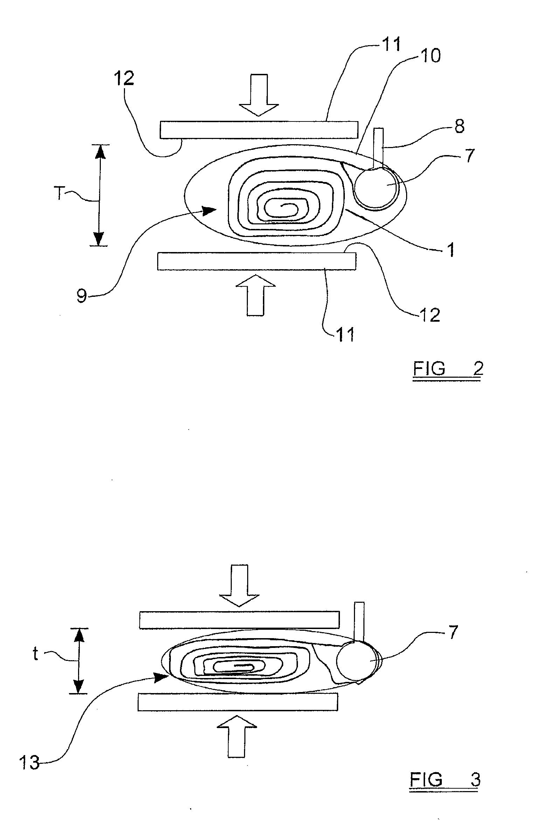

In order to package the airbag ready for installation in the vehicle, the airbag is initially rolled and/or folded into an intermediate package 9 as illustrated schematically in figure 2. The particular intermediate package illustrated in figure 2 is created by rolling the airbag 1 towards the inflator 7 to create a rolled package comprising a monotonous roll. It is to be noted, however, that the intermediate package could alternatively be formed by folding the airbag 1, or by creating two or more rolls in the airbag, or even via a combination of rolling and folding the airbag, each of which techniques are known *per se.* In the case of a rolling technique, the airbag 1 may be rolled around a mandrel (not shown) which may then be withdrawn from the resulting intermediate package along its axis.

As indicated in figure 2, the intermediate package 9 formed by rolling and/or folding the airbag 1 has an initial cross-sectional thickness T.

Optionally, the intermediate package 9 may be wrapped in a flexible cover 10 at this stage, as illustrated schematically in figure 2. The cover 10 is preferably formed from plastic material, and is most preferably formed of fabric similar or substantially identical to the fabric of the airbag 1 itself. The cover 10 may either be formed so as to substantially completely enclose the intermediate package 9, or may alternatively be formed as a simple wrapper extending around the central region of the package 9.Following creation of the intermediate package 9 as described above, the package is then positioned between a pair of opposing pressing members 11 forming part of a press, such as a hydraulic press. In the arrangement illustrated schematically in figure 2, the pressing members 11 each take the form of pressing plates defining respective planar pressing surfaces 12, although as will be described in detail below other configurations of pressing members 11 can also be used.

The press is then actuated to drive the two pressing members 11 towards one another, as indicated schematically by the arrows in figure 2, whilst the intermediate package 9 is simultaneously heated above ambient temperature. The intermediate package is thus simultaneously heated and pressed to form a compressed package 13 as illustrated schematically in figure 3. As will be noted, the cross-sectional thickness t of the compressed package 13 is significantly reduced relative to the cross-sectional thickness T of the intermediate package 9. In the preferred arrangement illustrated in figure 3, it will be noted that the cross-sectional thickness t of the compressed package 13 is approximately equal the diameter of the inflator 7. The resulting package thus has a very low profile and is thus significantly reduced in size.

Preferably, the press is operated to apply a pressing force of between 5 and 200 kN to the airbag 1, whilst at least one of the pressing members 11 is heated to a temperature between 80 and 150°C. A temperature of 130°C is particularly favoured. The press is maintained under these conditions for a period of between 30 seconds and 2 minutes..

Because of the plastic nature of the airbag material, the simultaneous application of pressure and heat to the intermediate package 9 via the press causes the fabric of the airbag (and also the cover 10 if used) to plastically deform as it is compressed. The rolled intermediate package 9 is flattened so as to present layers of rolled fabric which are substantially parallel to one another, with relatively sharp bends or folds where the fabric of the airbag is turned through 180°. Plastic deformation is particularly prominent and important in the areas of these folds or bends.

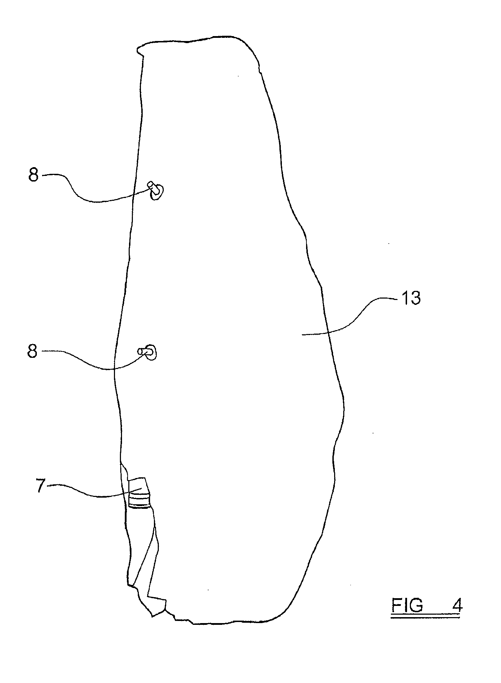

When the press is subsequently opened, the compressed package 13 expands to a limited extent as the pressure of the pressing members 11 is released, but it does not expand sufficiently to return to its initial configuration illustrated in figure 2. This is because of the plastic deformation caused in the fabric of the airbag 1 (and cover 10 if used). Figure 4 shows the compressed package 13 immediately following removal from the press.

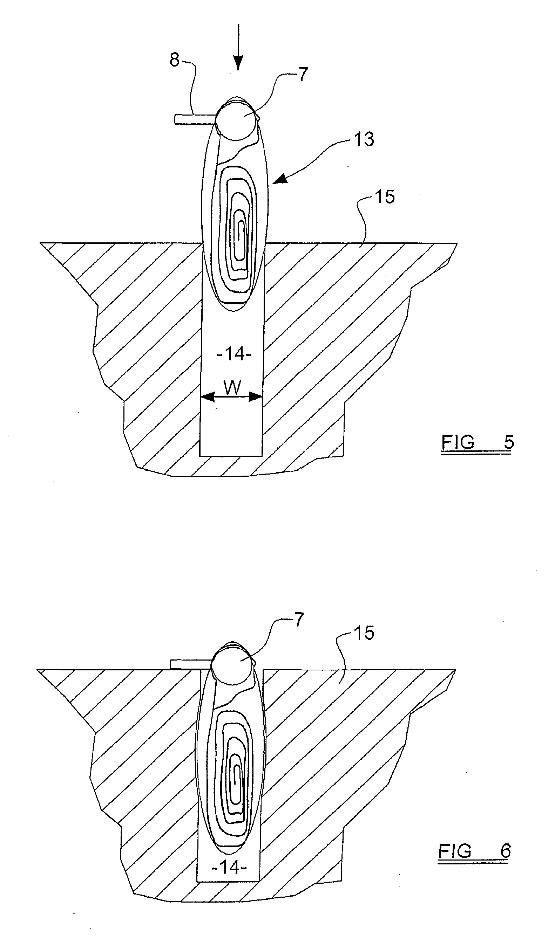

However, any such expansion of the compressed package 13 can be limited by carefully controlling the size of the package as it is cooled from its elevated temperature during pressing, back down to ambient temperature. It is therefore proposed to remove the compressed package 13 from the press as soon as the press is opened and to transfer it to a cavity 14 having a shape and size comparable to the shape and size of the compressed package 13, as illustrated schematically in figure 5.

Having regard to figure 5, the cavity 14 is formed within a resiliently deformable material 15, such as foam or the like. The particular form of cavity 14 illustrated in figure 14 has a generally rectangular cross-sectional profile, with a width w which is slightly less than the thickness t of the compressed package 13. Figure 5 shows the compressed (and still hot) package 13 being inserted downwardly into the cavity, with the inflator 7 and its projecting spigots 8 located at the top. Figure 6 shows the compressed package fully inserted into the cavity 14, and in this position it will be seen that the inflator 7 projects slightly above the cavity 14, but the majority of the compressed package is received within the cavity 14.

Due to the deformable nature of the material 15 within which the cavity 14 is formed, the edges of the cavity deform slightly to accommodate the thickness of the compressed package, as shown in figure 6. Due to the inherent resilience of the material 15, a light pressure is applied to the compressed package when it is received in the cavity 14 as shown.

The compressed package 13 is then cooled from its elevated temperature arising from the pressing step, back down to ambient temperature, whilst being positioned in the cavity 14 under the light pressure caused by the surrounding material 15. By cooling the compressed package 13 in this way, expansion of the package as it cools is limited, thereby minimising the size of the final airbag package. Preferably, the package is cooled simply by allowing the temperature of the package to fall naturally to ambient temperature without active cooling.

The cavity 14 is conveniently formed in a transportable unit, and so the compressed airbag package 13 can be transported from the press whilst being retained under light pressure in the cavity 14, and also whilst being cooled from its elevated temperature back down to ambient temperature. It is envisaged that the compressed package 13 will actually remain in the cavity 14 whilst it is transported to a vehicle assembly plant or to a vehicle component assembly plant, and indeed even right up until the moment the airbag unit is required to be installed in a motor vehicle, or part of a motor vehicle such as a seat, at the assembly plant. The transportable cavity 14 thus serves a dual role of ensuring the compressed package is held under light compression as it is cooled, and also providing a convenient receptacle for transport of the airbag to a vehicle assembly plant.

As will thus be appreciated, the transportable cavity 14 permits the packaged airbag to be shipped from an airbag assembly plant to a vehicle assembly plant whilst the compressed package 13 is still hot, or at least warm following the simultaneous heating and pressing step. This reduces production time as the airbags do not need to be cooled before being shipped.

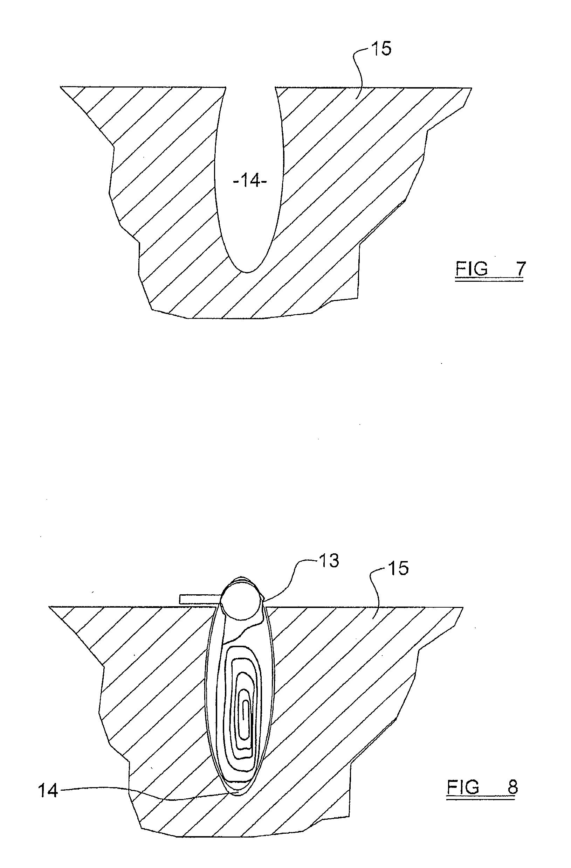

Figures 7 and 8 illustrate an alternative form of cavity 14, which has a cross-sectional profile more closely conforming to that of the compressed package 13. Accordingly, the cavity as a somewhat "tear-drop" shaped cross-sectional profile, and can thus be considered to represent a mould-like cavity specifically shaped to help impart a final shape or profile to the compressed package 13 as it is cooled and transported in the cavity 14.

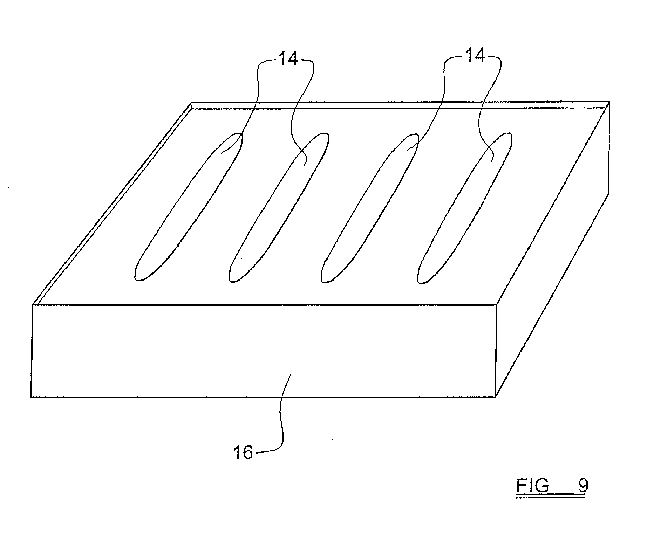

It is proposed that several cavities 14 will be provided within a single transport unit 16, such as a shipping crate or the like, as illustrated schematically in figure 9. In figure 9, the transport unit 16 takes the form of a generally rectangular box or crate, and may preferably be formed from strong impact resistant plastic or the like. The cavities 14 are provided in spaced-relation to one another in an array formed in an insert 15 of resilient material such as foam, which is provided inside the unit 16. As will be appreciated, each cavity 14 is configured to receive a respective compressed package 13, and the unit 16 illustrated is thus configured to receive and transport four airbag packages. It is to be appreciated that larger transport units are possible, each of which could receive and transport a much larger number of airbag packages.

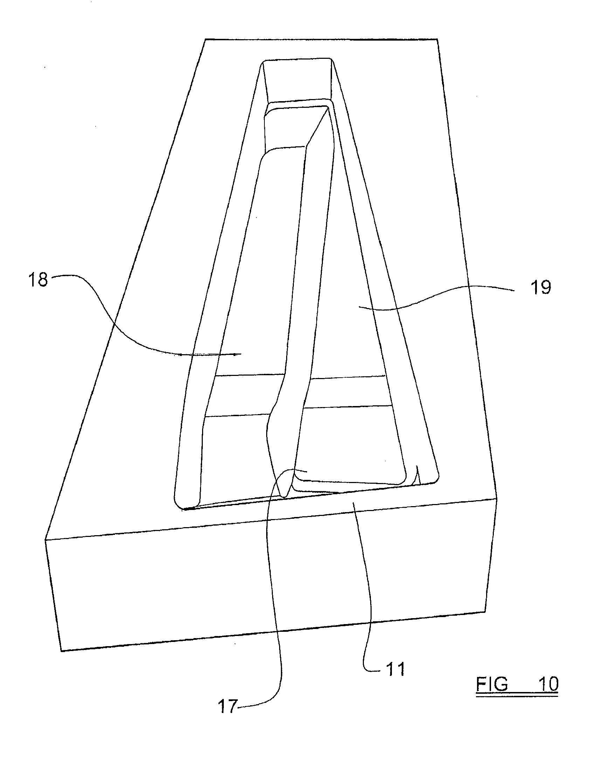

Whilst the invention has been described above with reference to specific embodiments configured to form generally flat compressed airbag packages 13, the invention could also be adapted to produce more complex and intricately shaped packages. For example, figure 10 illustrates an alternative configuration of press member 11 which rather than being generally planar as in the case of the embodiment described above, has a three-dimensional configuration. More particularly, it will be noted that the press member 11 shown in figure 10 has a recess 17, and thus can be considered to take the form of a mould. The recess 17 is stepped so as to define a first relatively shallow part, and a second relatively deep part.

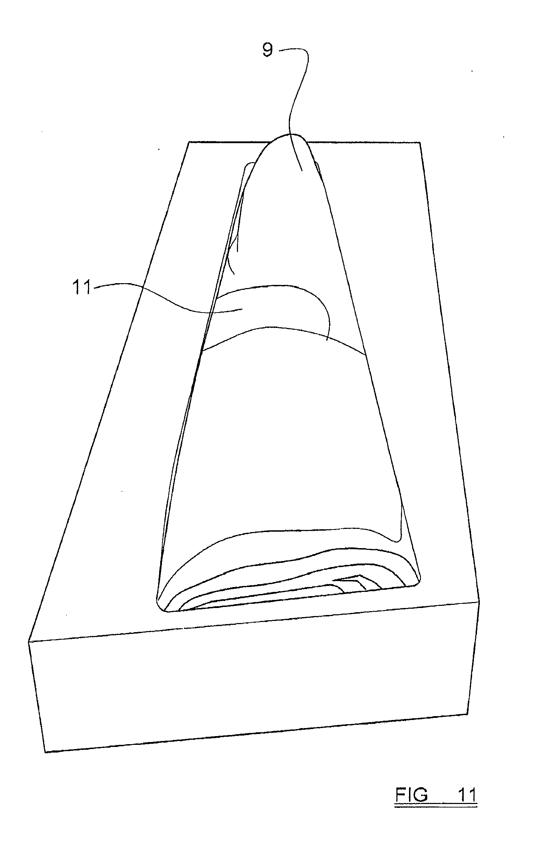

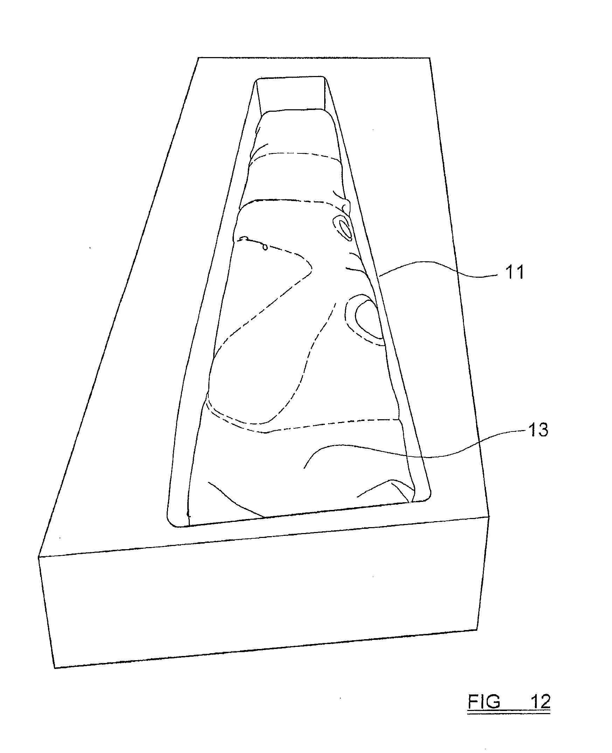

Figure 11 shows the rolled intermediate airbag package 9 inserted in the recess 17 of the press member 11. When properly positioned within the recess 17 as illustrated, another press member (not shown), which may be planar or three-dimensional itself, is then driven against the airbag package under pressure, and with simultaneous application of heat as described above, to form a compressed package within the recess 17 as illustrated in figure 12. As will be appreciated, the simultaneous application of pressure and heat to the airbag package inside the mould 17 causes plastic deformation to the fabric of the airbag such that the resulting compressed package 13 will have a permanent three-dimensional profile corresponding to that of the recess 17. In such a method, it is envisaged that the resulting compressed package will then be placed within a correspondingly shaped cavity 14 to retain its three-dimensional profile whilst it is cooled and transported.

Also, whilst the invention has been described above with reference to an embodiment in which the cover 10 is formed from fabric similar to that from which the airbag is formed, it is envisaged that in other embodiments the cover 10 could instead be formed from a different type of plastic material. For example, it envisaged that the cover 10 could be configured to be plastically deformed during the heating and pressing step of the method so as to adopt a final configuration having a distinct and defined three-dimensional shape.

When used in this specification and claims, the terms "comprises" and "comprising" and variations thereof mean that the specified features, steps or integers are included. The terms are not to be interpreted to exclude the presence of other features, steps or integers.

The features disclosed in the foregoing description, or in the following claims, or in the accompanying drawings, expressed in their specific forms or in terms of a means for performing the disclosed function, or a method or process for obtaining the disclosed results, as appropriate, may, separately, or in any combination of such features, be utilised for realising the invention in diverse forms thereof.

While the invention has been described in conjunction with the exemplary embodiments described above, many equivalent modifications and variations will be apparent to those skilled in the art when given this disclosure. Accordingly, the exemplary embodiments of the invention set forth above are considered to be illustrative and not limiting.

## Claims

1. A method of packaging an airbag (1) for a motor vehicle safety device, the method comprising the steps of: providing an inflatable airbag (1) formed of flexible sheet material (2,3); rolling and/or folding the airbag into an intermediate package (9) having an initial cross-sectional thickness (T); simultaneously heating and pressing the intermediate package (9) to form a compressed package (13) having a reduced cross-sectional thickness (t) relative to the intermediate package (9), the method being **characterised by** the steps of: subsequently placing the compressed package (13) in a transportable cavity (14) formed within a resiliently deformable material (15) and having a shape and size comparable to the shape and size of the compressed package (13) such that the resilience of the material (15) applies pressure to the compressed package (13) within the cavity (14); and cooling the compressed package (13) to ambient temperature whilst it is in said transportable cavity (14).

2. A method according to claim 1, wherein said step of heating and pressing the intermediate package (13) involves plastic deformation of the airbag (1) to form the compressed package (13).

3. A method according to claim 1 or claim 2, wherein the airbag (1) is formed from plastic fabric material.

4. A method according to any preceding claim, wherein the airbag (1) is formed from fabric woven from polyamide fibres.

5. A method according to any preceding claim, wherein the airbag (1) is formed from fabric having a coating.

6. A method according to claim 5, wherein said coating comprises thermoplastic material.

7. A method according to any preceding claim, further comprising the step of transporting the compressed package (13) whilst it is in said transportable cavity (14).

8. A method according to claim 7, wherein said step of transporting the compressed package (13) involves transporting the compressed package to a vehicle or component assembly plant.

9. A method according to claim 8, wherein the compressed package (13) remains in said transportable cavity (14) until it is required to be installed in a motor vehicle, or part of a motor vehicle, at said assembly plant.

10. A method according to any one of claims 7 to 9, wherein said transportation of the compressed package (13) occurs whilst it is being cooled to ambient temperature.

11. A method according to any preceding claim, wherein said step of cooling the compressed package (13) involves allowing the temperature of the package to fall naturally to ambient temperature without active cooling.

12. A method according to any preceding claim, wherein said transportable cavity (14) is provided within a transport unit (16), the transport unit having a plurality of said cavities (14) for the receipt of a plurality of airbags packaged in respective compressed packages (13).

13. A method according to claim 12, wherein said transport unit (16) comprises an insert of said resiliently deformable material (15), said cavities being formed in the insert.

14. A method according to any preceding claim, wherein said step of pressing the intermediate package (9) to form the compressed package (13) involves the application of a pressing force of at least 5000N to the airbag (1).

15. A method according to any preceding claim, wherein said step of pressing the intermediate package (9) to form the compressed package (13) involves the use of a press comprising at least one pressing member (11), said pressing member being heated to at least 80°C.

## Patentansprüche

1. Verfahren zum Verpacken eines Airbags (1) für eine Kraftfahrzeugsicherheitsvorrichtung, wobei das Verfahren folgende Schritte umfasst: Bereitstellen eines aufblasbaren Airbags (1), der aus flexiblem Bahnmaterial (2, 3) gebildet ist; Rollen und/oder Legen des Airbags in ein Zwischenpaket (9) mit einer Ausgangsquerschnittsdicke (T); gleichzeitiges Erwärmen der und Ausüben von Druck auf das Zwischenpaket (9) zum Bilden eines zusammengedrückten Pakets (13) mit einer geringeren Querschnittsdicke (t) bezogen auf das Zwischenpaket (9), wobei das Verfahren durch folgende Schritte gekennzeichnet ist: anschließendes Platzieren der zusammengedrückten Pakets (13) in einem transportierbaren Hohlraum (14), der in einem elastisch verformbaren Material (15) ausgebildet ist und eine Form und Größe aufweist, die mit der Form und Größe des zusammengedrückten Pakets (13) vergleichbar sind, sodass durch die Elastizität des Materials (15) Druck auf das zusammengedrückte Paket (13) in dem Hohlraum (14) ausgeübt wird; und Abkühlen des zusammengedrückten Pakets (13) auf Umgebungstemperatur, während es sich in dem transportierbaren Hohlraum (14) befindet.

2. Verfahren nach Anspruch 1, wobei der Schritt des Erwärmens der und des Ausübens von Druck auf das Zwischenpaket (13) eine plastische Verformung des Airbags (1) beinhaltet, um das zusammengedrückte Paket (13) zu bilden.

3. Verfahren nach Anspruch 1 oder Anspruch 2, wobei der Airbag (1) aus Kunststoff-Stoffmaterial gebildet ist.

4. Verfahren nach einem vorhergehenden Anspruch, wobei der Airbag (1) aus Stoff gebildet ist, der aus Polyamidfasern gewebt ist.

5. Verfahren nach einem vorhergehenden Anspruch, wobei der Airbag (1) aus Stoff gebildet ist, der eine Beschichtung aufweist.

6. Verfahren nach Anspruch 5, wobei die Beschichtung thermoplastisches Material umfasst.

7. Verfahren nach einem vorhergehenden Anspruch, das ferner den Schritt des Transportierens des zusammengedrückten Pakets (13) umfasst, während es sich in dem transportierbaren Hohlraum (14) befindet.

8. Verfahren nach Anspruch 7, wobei der Schritt des Transportierens des zusammengedrückten Pakets (13) das Transportieren des zusammengedrückten Pakets zu einem Fahrzeug- oder Bauteilmontagebetrieb umfasst.

9. Verfahren nach Anspruch 8, wobei das zusammengedrückte Paket (13) in dem transportierbaren Hohlraum (14) bleibt, bis es in einem Kraftfahrzeug oder einem Teil eines Kraftfahrzeugs in dem Montagebetrieb eingebaut werden soll.

10. Verfahren nach einem der Ansprüche 7 bis 9, wobei der Transport des zusammengedrückten Pakets (13) erfolgt, während es auf Umgebungstemperatur abgekühlt wird.

11. Verfahren nach einem vorhergehenden Anspruch, wobei der Schritt des Abkühlens des zusammengedrückten Pakets (13) beinhaltet, dass die Temperatur des Pakets auf natürliche Weise ohne aktive Kühlung auf Umgebungstemperatur sinken gelassen wird.

12. Verfahren nach einem vorhergehenden Anspruch, wobei der transportierbare Hohlraum (14) in einer Transporteinheit (16) angeordnet ist, wobei die Transporteinheit eine Vielzahl der Hohlräume (14) zur Aufnahme einer Vielzahl von Airbags aufweist, die in jeweiligen zusammengedrückten Paketen (13) verpackt sind.

13. Verfahren nach Anspruch 12, wobei die Transporteinheit (16) einen Einsatz aus dem elastisch verformbaren Material (15) umfasst, wobei die Hohlräume in dem Einsatz ausgebildet sind.

14. Verfahren nach einem vorhergehenden Anspruch, wobei der Schritt des Ausübens von Druck auf das Zwischenpaket (9) zum Bilden des zusammengedrückten Pakets (13) das Aufbringen einer Presskraft von mindestens 5000 N auf den Airbag (1) beinhaltet.

15. Verfahren nach einem vorhergehenden Anspruch, wobei der Schritt des Ausübens von Druck auf das Zwischenpaket (9) zum Bilden des zusammengedrückten Pakets (13) das Verwenden einer Presse beinhaltet, die mindestens ein Presselement (11) umfasst, wobei das Presselement auf mindestens -80°C erwärmt wird.

## Revendications

1. Procédé d'emballage d'un airbag (1) destiné à un dispositif de sécurité pour véhicule à moteur, le procédé comprenant les étapes consistant à : mettre à disposition un airbag gonflable (1) formé en matériau flexible en feuilles (2, 3) ; enrouler et/ou plier l'airbag en un paquet intermédiaire (9) présentant une épaisseur de section initiale (T) ; chauffer et comprimer simultanément le paquet intermédiaire (9) pour former un paquet comprimé (13) présentant une épaisseur de section (t) réduite par rapport au paquet intermédiaire (9), le procédé étant **caractérisé par** les étapes consistant à : placer ensuite le paquet comprimé (13) dans une cavité transportable (14) formée à l'intérieur d'un matériau (15) élastiquement déformable et présentant une forme et une taille comparable à la forme et à la taille du paquet comprimé (13) de sorte que la résilience du matériau (15) applique une pression sur le paquet comprimé (13) à l'intérieur de la cavité (14) ; et refroidir le paquet comprimé (13) à la température ambiante pendant qu'il est dans ladite cavité transportable (14).

2. Procédé selon la revendication 1, dans lequel ladite étape consistant à chauffer et comprimer le paquet intermédiaire (13) implique une déformation plastique de l'airbag (1) pour former le paquet comprimé (13).

3. Procédé selon la revendication 1 ou la revendication 2, dans lequel l'airbag (1) est formé à partir de matériau d'étoffe en matière plastique.

4. Procédé selon une quelconque revendication précédente, dans lequel l'airbag (1) est formé à partir d'étoffe tissés en fibres de polyamide.

5. Procédé selon une quelconque revendication précédente, dans lequel l'airbag (1) est formé à partir d'étoffe comportant un revêtement.

6. Procédé selon la revendication 5, dans lequel ledit revêtement comprend de la matière thermoplastique.

7. Procédé selon une quelconque revendication précédente, comprenant en outre l'étape consistant à transporter le paquet comprimé (13) pendant qu'il est dans ladite cavité transportable (14).

8. Procédé selon la revendication 7, dans lequel ladite étape consistant à transporter le paquet comprimé (13) implique le transport du paquet comprimé jusqu'à une usine de montage de véhicules ou de composants.

9. Procédé selon la revendication 8, dans lequel le paquet comprimé (13) reste dans ladite cavité transportable (14) jusqu'à ce qu'il doive être installé dans un véhicule à moteur, ou une partie d'un véhicule à moteur, dans ladite usine de montage.

10. Procédé selon l'une quelconque des revendications 7 à 9, dans lequel ledit transport du paquet comprimé (13) est effectué pendant qu'il est refroidi à la température ambiante.

11. Procédé selon une quelconque revendication précédente, dans lequel ladite étape consistant à refroidir le paquet comprimé (13) implique de laisser la température du paquet diminuer naturellement jusqu'à la température ambiante, sans refroidissement actif.

12. Procédé selon une quelconque revendication précédente, dans lequel ladite cavité transportable (14) est située à l'intérieur d'une unité de transport (16), l'unité de transport comportant une pluralité desdites cavités (14) pour la réception d'une pluralité d'airbags emballés dans des paquets comprimés (13) respectifs.

13. Procédé selon la revendication 12, dans lequel ladite unité de transport (16) comprend une pièce rapportée dudit matériau élastiquement déformable (15), lesdites cavités étant formées dans la pièce rapportée.

14. Procédé selon une quelconque revendication précédente, dans lequel ladite étape consistant à comprimer le paquet intermédiaire (9) pour former le paquet comprimé (13) implique l'application d'une force de pression d'au moins 5000 N sur l'airbag (1).

15. Procédé selon une quelconque revendication précédente, dans lequel ladite étape consistant à comprimer le paquet intermédiaire (9) pour former le paquet comprimé (13) implique l'utilisation d'une presse comprenant au moins un élément de pression (11), ledit élément de pression étant chauffé à au moins 80 °C.
